# EUROPÄISCHE PATENTSCHRIFT

(11) **EP 3 479 993 B1**
(45) Veröffentlichungstag und Bekanntmachung des Hinweises auf die Patenterteilung: **01.01.2020**
(21) Anmeldenummer: 17200278.4
(22) Anmeldetag: 07.11.2017
(51) Int. Cl.: B29C 48/70, B29C 48/32, B29C 48/30

(54) **RINGVERTEILER FÜR EINEN EXTRUSIONSKOPF ZUR HERSTELLUNG EINES SCHLAUCHFÖRMIGEN FORMLINGS AUS THERMOPLASTISCHEM KUNSTSTOFF**
RING DISTRIBUTOR FOR AN EXTRUDER HEAD FOR MANUFACTURING A HOSE-LIKE MOULDED MATERIAL MADE OF THERMOPLASTIC MATERIAL
DISTRIBUTEUR ANNULAIRE POUR UNE TÊTE D'EXTRUSION PERMETTANT DE FABRIQUER UNE PIÈCE MOULÉE EN FORME TUBULAIRE EN MATIÈRE THERMOPLASTIQUE

(43) Veröffentlichungstag der Anmeldung: 08.05.2019
(73) Patentinhaber: W. Müller GmbH, 53842 Troisdorf (DE)
(72) Erfinder: BAKRI, Farid, 53819 Neunkirchen-Seelscheid (DE); WALTER, Ulrich, 53797 Lohmar (DE)
(74) Vertreter: Neumann Müller Oberwalleney & Partner Patentanwälte

(56) Entgegenhaltungen:
- EP-A1- 0 965 433
- US-A- 3 270 371
- US-A- 4 182 603
- US-A- 5 114 333
- US-B2- 7 476 094

## Beschreibung

Die Erfindung betrifft einen Ringverteiler für einen Extrusionsschlauchkopf zur Herstellung eines schlauchförmigen Formlings aus thermoplastischem Kunststoff. Der Ringverteiler weist einen Aufnahmekörper mit einem ersten Aufnahmeraum mit einer Innenfläche auf. In dem ersten Aufnahmeraum ist eine erste Verteilerhülse aufgenommen. Die erste Verteilerhülse weist eine Außenfläche mit einer Verteilernut auf. Ferner weist der Ringverteiler einen ringförmigen ersten Verteilerraum auf, der zwischen der Innenfläche des ersten Aufnahmeraums und der Außenfläche der ersten Verteilerhülse gebildet ist, und der in eine Ringspaltöffnung mündet.

Ein Extrusionsschlauchkopf dient zur Herstellung eines schlauchförmigen Formlings oder Vorformlings aus thermoplastischem Kunststoff. Hierbei wird extrodierte und somit plastifizierte thermoplastische Kunststoffmasse (Kunststoffschmelze) aus einem Extruder dem Extrusionsschlauchkopf zugeführt, in dem die massive Kunststoffmasse zu einem Schlauch (schlauchförmiger Formling) geformt wird. Der so entstandene schlauchförmiger Formling kann zum Beispiel durch Extrusionsblasformen in einer Blasform zu einem Hohlkörper weiterverarbeitet werden.

Ein Ringverteiler der eingangs genannten Art ist aus der EP 2 202 046 A1 bekannt. Der dort beschriebene Extrusionskopf weist einen Aufnahmekörper auf, in dem mindestens ein Strömungsraum zum Ausbilden eines Hohlstrangs aus extrudierbarem Kunststoff vorgesehen ist, sowie je Strömungsraum mindestens zwei Verteilerkanäle, die mit unterschiedlichen Anschlusskanälen verbunden sind, wobei die Anschlusskanäle jeweils mit einem separaten Extruder verbindbar sind. Je Strömungsraum ist ein Verteiler vorgesehen, der eine Außenfläche aufweist, die eine innere Begrenzung des Strömungsraums darstellt, wobei die Verteilerkanäle in Form von Vertiefungen in der Außenfläche ausgebildet sind. Die Verteilerkanäle verlaufen jeweils über einen Teil des Umfangs des Strömungsraums. Um eine gleichmäßige Verteilung über den gesamten Umfang des Strömungsraums zu gewährleisten, sind über den gesamten Umfang des Strömungsraums mehrere Verteilerkanäle vorgesehen. Die Verteilerkanäle sind jeweils in die Außenfläche in Form einer Nut eingearbeitet. Die Verteilerkanäle sind jeweils in einen ersten Verteilerast und einen zweiten Verteilerast aufgeteilt, die sich ausgehend von einem Zuführkanal in Form einer sogenannten Herzkurve aufgabeln. Im Bereich, in dem die beiden Verteileräste zusammentreffen, können sich sichtbare Fügestellen im schlauchförmigen Formling ergeben.

EP 0 965 433 A1 offenbart einen Extrusionskopf zum Extrudieren von Kunststoffmaterialien in mehrschichtiger rohrförmiger Form. Der Extrusionskopf weist einen ringförmigen Durchgang zum Fördern von Kunststoffmaterial auf. Der Fließkanal ist zwischen einem inneren Körper und einen äußeren Körper gebildet. In dem inneren Körper sind bogenförmige Durchgänge gebildet, die den inneren Körper vollständig umgeben. In einer Ausführungsform ist ein einziger bohrungsförmiger Durchgang gebildet, der sich über mehr als 450° des Umfangs des inneren Körpers erstreckt.

US 7 476 094 B2 offenbart ein Dosiersystem mit einer Ventilstange, in die eine Wendelnut eingearbeitet ist, wobei die Wendelnut mehr als zwei Windungen aufweist.

US 3 270 371 A zeigt einen Extrusionskopf mit einem Dorn, der in einem hülsenförmigen Gehäuse aufgenommen ist. Der Dorn weist über einen ersten axialen Bereich eine wendelförmige Nut auf, die in einen ringförmigen Verteilerraum mündet. Die wendelförmige Nut dient dazu, die Kunststoffschmelze tangential in den Verteilerraum einzuleiten, wobei sich die wendelförmige Nut über mehr als 1,25 Windungen erstreckt.

Einen Extrusionskopf zur Herstellung eines schlauchförmigen Films für Folienblasanlagen zeigt JP 2000 127219 A. Der Extrusionskopf weist einen Dorn auf, in dessen Außenfläche eine wendelförmige Nut vorgesehen ist. Weitere Extrusionsköpfe mit wendelförmigen Nuten zeigen US 4 182 603 A und US 5 114 333 A.

Aufgabe der vorliegenden Erfindung ist es, einen Ringverteiler für einen Extrusionsschlauchkopf bereitzustellen, bei dessen Verwendung zur Herstellung eines schlauchförmigen Formlings aus thermoplastischem Kunststoff möglichst keine Fügestellen sichtbar sind.

Die Aufgabe wird mit einem Ringverteiler für einen Extrusionsschlauchkopf zur Herstellung eines schlauchförmigen Formlings aus thermoplastischem Kunststoff gelöst, der einen Aufnahmekörper mit einem ersten Aufnahmeraum mit einer Innenfläche aufweist. In dem ersten Aufnahmeraum ist eine erste Verteilerhülse aufgenommen. Die erste Verteilerhülse weist eine Außenfläche mit einer Verteilernut auf. Ferner weist der Ringverteiler einen ringförmigen ersten Verteilerraum auf, der zwischen der Innenfläche des ersten Aufnahmeraums und der Außenfläche der ersten Verteilerhülse gebildet ist, und der in eine Ringspaltöffnung mündet. Die Außenfläche der ersten Verteilerhülse ist mit einer einzigen wendelförmigen Verteilernut mit mehr als einer Windung und weniger als 1,25 Windungen versehen.

Der Verlauf der Verteilernut kann insbesondere dem Verlauf einer dreidimensionalen Spirale entsprechen. Der Verlauf einer dreidimensionalen Spirale im Sinne dieser Offenbarung umfasst einen schraubenförmigen oder helixförmigen Verlauf, bei dem die Verteilernut auf einer zylindrischen Außenfläche angeordnet ist. Der Verlauf einer dreidimensionalen Spirale umfasst ferner einen Verlauf entlang einer konusförmigen Spirale, bei dem die Verteilernut in eine konusförmige Außenfläche eingebracht ist.

Die Verteilernut der ersten Verteilerhülse weist somit in axialer Richtung zwei sich überlappende Bereiche auf, die sich maximal bis zu einem Viertel einer Windung erstrecken. Somit überlappt sich die Verteilernut über wenigstens drei Viertel einer Windung nicht. Die sich überlappenden Bereiche der Verteilernut sorgen dafür, dass sich die Kunststoffschmelze in diesem Bereich über den Umfang besser vermischt und keine sichtbare Fügestelle oder Fügekante im Formling ergibt, wie dies bei herzkurvenförmigen Verteilernuten vorkommt. Über wenigstens drei Viertel des Umfangs findet keine Vermischung statt, sodass hier eine möglichst gleichmäßige Ausbringung der Kunststoffschmelze gewährleistet ist, wobei sichtbare Fügestellen durch die Vermischung der Kunststoffschmelze im Überlappungsbereich vermieden werden.

In einem Ausführungsbeispiel kann vorgesehen sein, dass die Verteilernut der ersten Verteilerhülse ein der Ringspaltöffnung entferntes erstes Ende, das von einem Anschlusskanal zur Zuführung von Kunststoffschmelze gespeist wird, und ein der Ringspaltöffnung nahes zweites Ende aufweist. Hierbei kann die Tiefe der Verteilernut der ersten Verteilerhülse vom ersten Ende zum zweiten Ende abnehmen. Hierdurch wird gewährleistet, dass der Druck in der Kunststoffschmelze über die Länge der Verteilernut ausgehend vom ersten Ende in Richtung des zweiten Endes zumindest annähernd konstant bleibt. Hierzu kann die Tiefe kontinuierlich abnehmen. Grundsätzlich ist jedoch auch eine Verteilernut mit einer konstanten Tiefe oder bereichsweise mit konstanter Tiefe denkbar.

Gemäß einem Ausführungsbeispiel ist die Außenfläche der ersten Verteilerhülse zumindest teilweise entlang einer axialen Erstreckung der ersten Verteilerhülse kegelstupfförmig gestaltet.

Um über die axiale Erstreckung der ersten Verteilerhülse bzw. des ersten Verteilerraums eine zumindest weitestgehend konstante Dicke des Verteilerraums quer zur Außenfläche der ersten Verteilerhülse zu gewährleisten, können die Außenfläche der ersten Verteilerhülse und die Innenfläche des ersten Aufnahmeraums zumindest im Bereich des ersten Verteilerraums parallel zueinander verlaufen.

Gemäß einem Ausführungsbeispiel ist vorgesehen, dass die Außenfläche der ersten Verteilerhülse auf der von der Ringspaltöffnung abgewandten Seite der Verteilernut und zumindest bereichsweise zwischen den sich in axialer Richtung überlappenden Bereichen der Verteilernut in dichtender Anlage zur Innenfläche des ersten Aufnahmeraums ist. Somit ist durch eine einfache konstruktive Maßnahme sichergestellt, dass der Verteilerraum in Richtung von der Ringspaltöffnung weg abgedichtet ist. Damit wird gewährleistet, dass die Kunststoffschmelze nur in Richtung zur Ringspaltöffnung ausgestoßen wird.

Hierbei kann vorgesehen sein, dass die Außenfläche der ersten Verteilerhülse zwischen den sich in axialer Richtung überlappenden Bereichen der Verteilernut, ausgehend vom ersten Ende der Verteilernut der ersten Verteilerhülse in Richtung zum zweiten Ende über einen Teil des überlappenden Bereichs in dichtender Anlage zur Innenfläche des ersten Aufnahmeraums ist. Somit ist sichergestellt, dass die überlappenden Bereiche der Verteilernut über einen Umfangsbereich, der das zweite Ende der Verteilernut umfasst, über den Verteilerraum miteinander verbunden sind. Somit kann Kunststoffschmelze kurz nach dem ersten Ende aus der Verteilernut in den Verteilerraum in Richtung zum Endbereich der Verteilernut am zweiten Ende überströmen. Zwischen dem ersten Ende der Verteilernut in Richtung zum überlappenden Bereich der Verteilernut im Bereich des zweiten Endes ist hingegen eine dichtende Anlage der Außenfläche der ersten Verteilerhülse gegen die Innenfläche des ersten Aufnahmeraums bereichsweise gewährleistet. Dies bedeutet, dass in dem Anfangsbereich ausgehend vom ersten Ende kein Überströmen aus der Verteilernut stattfindet. Im Bereich der Zuführung der Kunststoffschmelze in die Verteilernut am ersten Ende sind gegebenenfalls keine kontrollierten Strömungsverhältnisse zu gewährleisten, da die Anströmung in der Regel senkrecht zur Außenfläche der ersten Verteilerhülse stattfindet, so dass durch die abdichtende Anlage der Außenfläche der ersten Verteilerhülse in diesem Bereich Markierungen am Formling vermieden werden.

Gemäß einem Ausführungsbeispiel weist der Ringverteiler ferner eine Pinole auf, die sich durch eine zentrale Bohrung der ersten Verteilerhülse erstreckt, wobei zwischen der Pinole und der ersten Verteilerhülse ein ringförmiger Strömungskanal gebildet ist, in den die Ringspaltöffnung mündet. Der Strömungskanal wiederum kann zu einer Ringdüse führen, an der die Kunststoffschmelze aus dem Extrusionskopf austritt.

Gemäß einer speziellen Ausführungsform kann vorgesehen sein, dass der Ringverteiler einen zweiten Aufnahmeraum in dem Aufnahmekörper aufweist, wobei der zweite Aufnahmeraum eine Innenfläche hat. Ferner kann eine zweite Verteilerhülse mit einer Außenfläche vorgesehen sein, die eine Verteilernut aufweist, wobei die zweite Verteilerhülse in dem zweiten Aufnahmeraum aufgenommen ist. Ferner kann der Ringverteiler einen ringförmigen zweiten Verteilerraum bilden, der zwischen der Innenfläche des zweiten Aufnahmeraums und der Außenfläche der zweiten Verteilerhülse gebildet ist, und der in die Ringspaltöffnung mündet. Die Außenfläche der zweiten Verteilerhülse kann hierbei eine einzige wendelförmige Verteilernut mit mehr als einer Windung und weniger als 1,25 Windungen aufweisen. Der Verlauf der Verteilernut der zweiten Verteilerhülse kann insbesondere dem Verlauf einer dreidimensionalen Spirale entsprechen, wie dies auch im Zusammenhang mit der Verteilernut der ersten Verteilerhülse beschrieben ist.

Somit weist der Ringverteiler zwei Verteilerräume auf, um gegebenenfalls zwei verschiedene Kunststoffmaterialien zuzuführen oder eine noch bessere Verteilung der Kunststoffschmelze zu gewährleisten.

Hierbei können die Außenfläche der ersten Verteilerhülse und die Außenfläche der zweiten Verteilerhülse jeweils zumindest teilweise entlang einer axialen Erstreckung des Ringverteilers kegelstumpfförmig gestaltet sein.

Der Kegelwinkel der Außenfläche der ersten Verteilerhülse und der Kegelwinkel der Außenflächen der zweiten Verteilerhülse können sich in entgegengesetzte Richtungen öffnen.

Um zu vermeiden, dass der ausgestoßene schlauchförmige Formling aufgrund der Vermischung der Kunststoffschmelze im Überlappungsbereich der Verteilernut gebogen ausgestoßen wird, kann vorgesehen sein, dass die Verteilernut der ersten Verteilerhülse ein der Ringspaltöffnung entferntes erstes Ende aufweist, das von einer Schmelzeführung gespeist wird, und dass die Verteilung der zweiten Verteilerhülse ein der Ringspaltöffnung entferntes erstes Ende aufweist, das von der Schmelzeführung gespeist wird, wobei das erste Ende der Verteilernut der ersten Verteilerhülse und das erste Ende der Verteilernut der zweiten Verteilerhülse, bezogen auf eine Längsachse des Ringverteilers, auf diametral entgegengesetzten Seiten angeordnet sind.

Die Gestaltung der Außenfläche und der Verteilernut der ersten Verteilerhülse und die Gestaltung der Außenfläche und der Verteilernut der zweiten Verteilerhülse können identisch sein.

Ein bevorzugtes Ausführungsbeispiel wird anhand der folgenden Figuren näher erläutert. Hierin zeigen:
- Figur 1: eine erste Explosionsdarstellung eines Ringverteilers;
- Figur 2: eine zweite Explosionsdarstellung des Ringverteilers gemäß Figur 1;
- Figur 3: einen ersten Längsschnitt des Ringverteilers gemäß Figur 1;
- Figur 4: einen zweiten Längsschnitt des Ringverteilers gemäß Figur 1, und
- Figur 5: einen Ausschnitt eines Längsschnitts durch einen Extrusionsschlauchkopf mit einem Ringverteiler gemäß Figur 1.

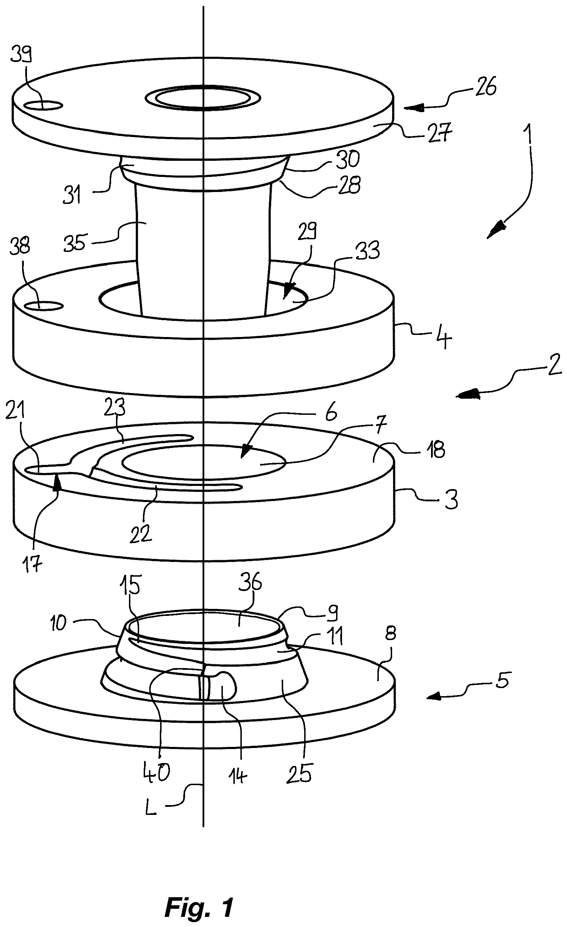

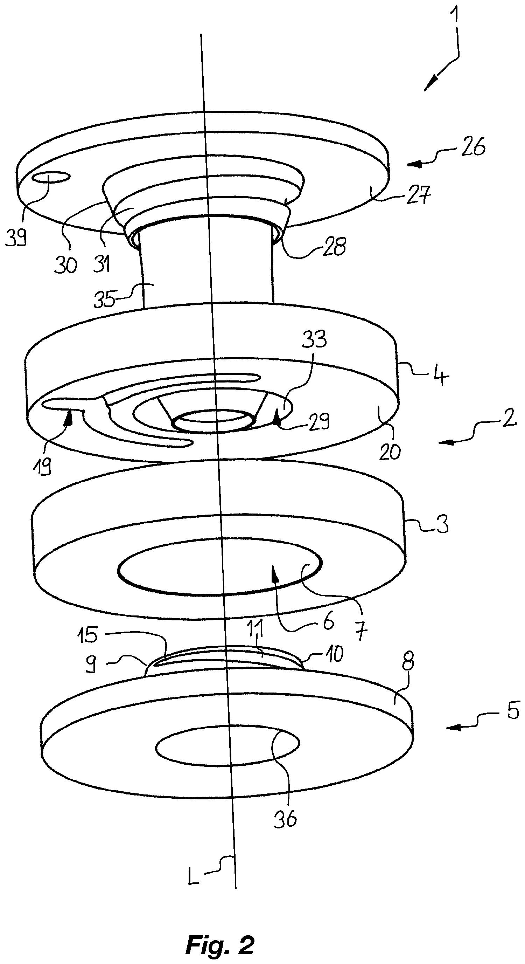

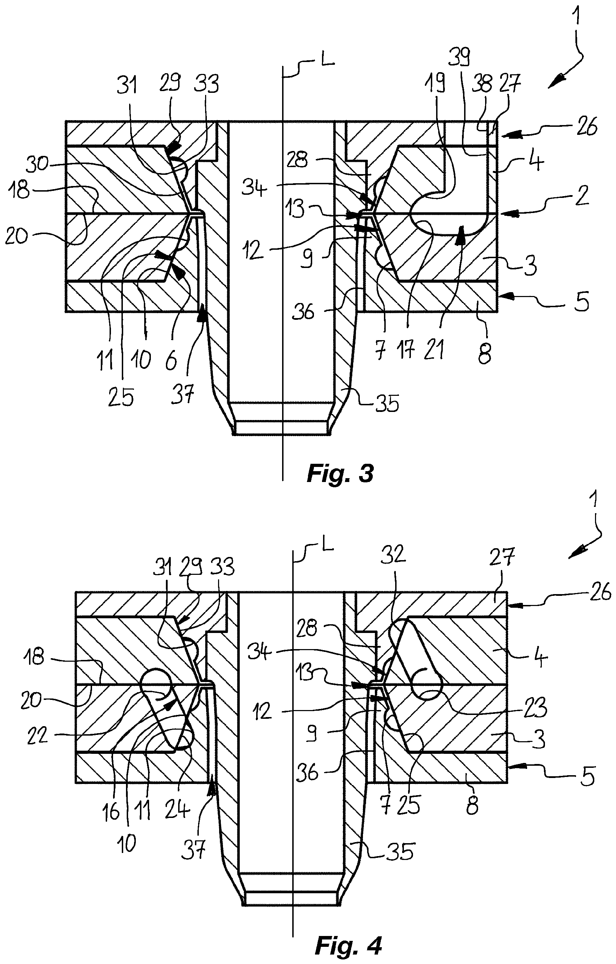

Die Figuren 1 bis 4 zeigen einen Ringverteiler 1 für einen Extrusionsschlauchkopf zur Herstellung eines schlauchförmigen Formlings aus thermoplastischem Kunststoff. Der Ringverteiler 1 umfasst einen Aufnahmekörper 2, der wiederum ein erstes Ringelement 3 und ein zweites Ringelement 4 aufweist. Die beiden Ringelemente 3, 4 sind koaxial zu einer Längsachse L des Ringverteilers 1 angeordnet und axial gegeneinander abgestützt.

Der Ringverteiler 1 umfasst ferner eine erste Verteilerhülse 5. Das erste Ringelement 3 des Aufnahmekörpers 2 weist einen ersten Aufnahmeraum 6 auf, der koaxial zur Längsachse L als Durchbruch mit einer Innenfläche 7 gestaltet ist. Der Aufnahmeraum 6 durchdringt das erste Ringelement 3 somit vollständig in axialer Richtung.

Die erste Verteilerhülse 5 weist einen Flanschabschnitt 8 und einen Hülsenabschnitt 9 auf. Mit dem Flanschabschnitt 8 ist die erste Verteilerhülse 5 axial auf einer von dem zweiten Ringelement 4 abgewandten Seite des ersten Ringelements 3 gegen das erste Ringelement 3 axial abgestützt. Mit dem Hülsenabschnitt 9 ist die erste Verteilerhülse 5 in dem ersten Aufnahmeraum 6 aufgenommen. Der Hülsenabschnitt 9 der ersten Verteilerhülse 5 weist eine Außenfläche 10 auf, in die eine Verteilernut 11 eingeformt ist. Die Verteilernut 11 ist wendelförmig gestaltet und weist mehr als eine Windung und weniger als eineinviertel Windungen auf.

Zwischen der Innenfläche 7 des ersten Aufnahmeraums 6 und der Außenfläche 10 der ersten Verteilerhülse 5 ist ein Verteilerraum 12 gebildet, der in eine Ringspaltöffnung 13 mündet.

Die Verteilernut 11 der ersten Verteilerhülse 5 weist ein erstes Ende 14 und ein zweites Ende 15 auf. Das erste Ende 14 (Zulaufende) ist, in axialer Richtung bezogen auf die Längsachse L, weiter entfernt von der Ringspaltöffnung 13 angeordnet als das zweite Ende (Auslaufende). Das Einlaufende 14 ist zudem näher zum Flanschabschnitt 8 angeordnet als das Auslaufende 15.

Das Einlaufende 14 der Verteilernut 11 wird von einem Anschlusskanal 16 mit Kunststoffschmelze gespeist. Im vorliegenden Ausführungsbeispiel ist der Anschlusskanal durch eine Nut 17 in einer dem zweiten Ringelement 4 zugewandten Oberfläche 18 des ersten Ringelements 3 und einer Nut 19 in einer dem ersten Ringelement zugewandten Oberfläche 20 des zweiten Ringelements 4 gebildet. Über die Oberflächen 18, 20 sind das erste Ringelement 3 und das zweite Ringelement 4 miteinander in Anlage, wobei die Nuten 17, 19 einander gegenüberliegend angeordnet sind, so dass der Anschlusskanal 16 ausgebildet ist. Ausgehend von einem Zulauf 21 gabelt sich der Anschlusskanal 16 in einen ersten Kanalast 22 und einen zweiten Kanalast 23 auf. Der erste Kanalast 22 führt zu einer ersten Anschlussöffnung 24, welche in die Innenfläche 7 des ersten Aufnahmeraums 6 mündet und mit dem Zulaufende 14 der Verteilernut 11 der ersten Verteilerhülse 5 fluchtet. Somit wird die Verteilernut 11 der ersten Verteilerhülse 5 mit Kunststoffschmelze gespeist.

Alternativ kann der Anschlusskanal 16 auch in der ersten Verteilerhülse 5 angeordnet sein, sodass die Verteilernut 11 von innen gespeist wird.

Ausgehend von dem Zulaufende 14 nimmt die Tiefe der Verteilernut 11 bis zum Auslaufende 15 kontinuierlich ab. Hierdurch werden entlang der Fließrichtung zumindest annähernd konstante Druckverhältnisse innerhalb der Verteilernut 11 gewährleistet.

Die Außenfläche 10 der ersten Verteilerhülse 5 ist kegelstumpfförmig gestaltet, genauso wie die Innenfläche 7 des ersten Aufnahmeraums 6. Hierbei sind die Außenfläche 10 der ersten Verteilerhülse 5 und die Innenfläche 7 des ersten Aufnahmeraums 6 parallel zueinander angeordnet.

In einem Bereich der Außenfläche 10 der ersten Verteilerhülse 5, der von der Verteilernut 11 abgewandt ist bzw. zwischen dem Flanschabschnitt 8 und der Verteilernut 11 liegt, ist die Außenfläche 10 der ersten Verteilerhülse 5 in dichtender Anlage mit der Innenfläche 7 des ersten Aufnahmeraums 6. Darüber hinaus erstreckt sich dieser Dichtabschnitt 25 weiter bis zwischen die sich überlappenden Abschnitte der Verteilernut 11, und zwar teilweise ausgehend von dem ersten Ende 14 der Verteilernut 11 in Windungsrichtung über einen Teil des Überlappungsbereichs in Richtung zum zweiten Ende der Verteilernut 11. Die Grenze 40 des Dichtabschnitts 25 ist in Figur 1 durch eine Kante markiert. Somit ist gewährleistet, dass keine Kunststoffschmelze in Richtung zum Flanschabschnitt 8 bzw. in Richtung von der Ringspaltöffnung 13 weg aus der Verteilernut 11 austreten kann.

In dem darüber hinausgehenden Bereich zwischen den überlappenden Abschnitten der Verteilernut 11 sind die Außenfläche 10 der ersten Verteilerhülse 5 und die Innenfläche 7 des ersten Aufnahmeraums 6 mit Abstand zueinander angeordnet, so dass dieser Bereich Teil des ersten Verteilerraums 12 ist.

Die Kunststoffschmelze wird somit am Zulaufende 14 der Verteilernut 11 zugeführt, wobei das Zulaufende 14 vom Dichtabschnitt 25 der Außenfläche 10 der ersten Verteilerhülse 5 umgeben ist. Daher kann in dem Bereich des Zulaufendes 14 keine Kunststoffschmelze aus der Verteilernut 11 austreten. Die Kunststoffschmelze fließt dann in Windungsrichtung in Richtung zum Auslaufende 15 der Verteilernut 11. Sobald die Kunststoffschmelze den ersten Verteilerraum 12 erreicht, kann dieser in axialer Richtung teilweise aus der Verteilernut 11 austreten. Im Überlappungsbereich der Verteilernut 11 strömt somit Kunststoffschmelze aus dem dem Flansch 8 nahen Ende der Verteilernut 11 in axialer Richtung in Richtung zur Ringspaltöffnung 13 und vermischt sich dann mit der Kunststoffschmelze, die im Bereich des Auslaufendes 15 fließt und strömt weiter, zusammen mit einem Teil der Kunststoffschmelze aus dem Bereich der Verteilernut 11 am Auslaufende 15 hin zur Ringspaltöffnung 13. Hierdurch ergibt sich eine gute Vermischung der Kunststoffschmelze und es wird eine Formkante vermieden. In den übrigen, sich nicht überlappenden Bereichen der Verteilernut 11 fließt die Kunststoffschmelze in axialer Richtung aus der Verteilernut 11 aus und bildet unmittelbar den schlauchförmigen Formling, ohne Gefahr von Markierungen im Formling.

Der Ringverteiler 1 weist ferner eine zweite Verteilerhülse 26 auf, welche einen Flanschabschnitt 27 und einen Hülsenabschnitt 28 umfasst. Mit dem Flanschabschnitt 27 ist die zweite Verteilerhülse 26 auf einer dem ersten Ringelement 3 abgewandten Seite des zweiten Ringelements 4 gegen das zweite Ringelement 4 axial abgestützt. Der Hülsenabschnitt 28 ist in einem zweiten Aufnahmeraum 29 des zweiten Ringelements 4 aufgenommen. Der zweite Aufnahmeraum ist als Durchbruch in dem zweiten Ringelement 4 ausgebildet, der das zweite Ringelement 4 in axialer Richtung vollständig durchdringt und eine Innenfläche 33 bildet.

Der Hülsenabschnitt 28 der zweiten Verteilerhülse 26 weist analog zum Hülsenabschnitt 9 der ersten Verteilerhülse 5 eine Außenfläche 30 auf, in der eine Verteilernut 31 eingeformt ist. Der Hülsenabschnitt 28 der zweiten Verteilerhülse 26 ist identisch zum Hülsenabschnitt 9 der ersten Verteilerhülse 5 gestaltet. Die Außenfläche 30 der zweiten Verteilerhülse 26 ist somit ebenfalls kegelstumpfförmig ausgestaltet, wobei sich der Kegelwinkel der Außenfläche 30 der zweiten Verteilerhülse 26 in entgegengesetzter Richtung zum Konuswinkel der Außenfläche 10 der ersten Verteilerhülse 5 öffnet.

Die Verteilernut 31 der zweiten Verteilerhülse 26 wird von dem zweiten Kanalast 23, der in eine zweite Anschlussöffnung 32 einer Innenfläche 33 des zweiten Aufnahmeraums 29, gespeist. Zwischen der Innenfläche 33 des zweiten Aufnahmeraums 29 und der Außenfläche 30 der zweiten Verteilerhülse 26 ist ein zweiter Verteilerraum 34 gebildet, welcher in die Ringspaltöffnung 13 mündet.

Die erste Anschlussöffnung 24 und die zweite Anschlussöffnung 32 sind auf diametral gegenüberliegenden Seiten der Längsachse L angeordnet. Somit sind auch die sich überlappenden Bereiche der Verteilernut 11 der ersten Verteilerhülse 5 und die überlappenden Bereiche der Verteilernut 31 der zweiten Verteilerhülse 26 auf diametral gegenüberliegenden Seiten angeordnet. Hierdurch wird gewährleistet, dass ein gleichmäßiger schlauchförmiger Formling gebildet wird.

Im Übrigen wird im Zusammenhang mit der zweiten Verteilerhülse 26 auf das zur ersten Verteilerhülse 5 Gesagte verwiesen, da diese funktional identisch aufgebaut sind.

Im Gegensatz zur ersten Verteilerhülse 5 weist die zweite Verteilerhülse 26 eine Pinole 35 auf, die sich auf einer vom Flanschabschnitt 27 der zweiten Verteilerhülse 26 abgewandten Seite des Hülsenabschnitts 28 von dem Hülsenabschnitt 28 in axialer Richtung erstreckt und den ersten Aufnahmeraum 6, den zweiten Aufnahmeraum 29 und eine zentrale Bohrung der ersten Verteilerhülse 5 hindurch erstreckt, so dass zwischen der Pinole 35 und der ersten Verteilerhülse 5 ein ringförmiger Strömungskanal 37 gebildet ist, in den die Ringspaltöffnung 13 mündet.

Das zweite Ringelement 4 weist eine Durchgangsbohrung 38 auf, welche parallel zur Längsachse L verläuft. In dem Flanschabschnitt 27 der zweiten Verteilerhülse 26 ist eine weitere Durchgangsbohrung 39 vorgesehen, die ebenfalls parallel zur Längsachse L verläuft. Die Durchgangsbohrung 38 des zweiten Ringelements 4 und die Durchgangsbohrung 39 der zweiten Verteilerhülse 26 fluchten zueinander und sind fluchtend zum Zulauf 21 des Anschlusskanals 16 ausgerichtet und bilden somit einen Zuführungskanal zum Zuführen von Kunststoffschmelze.

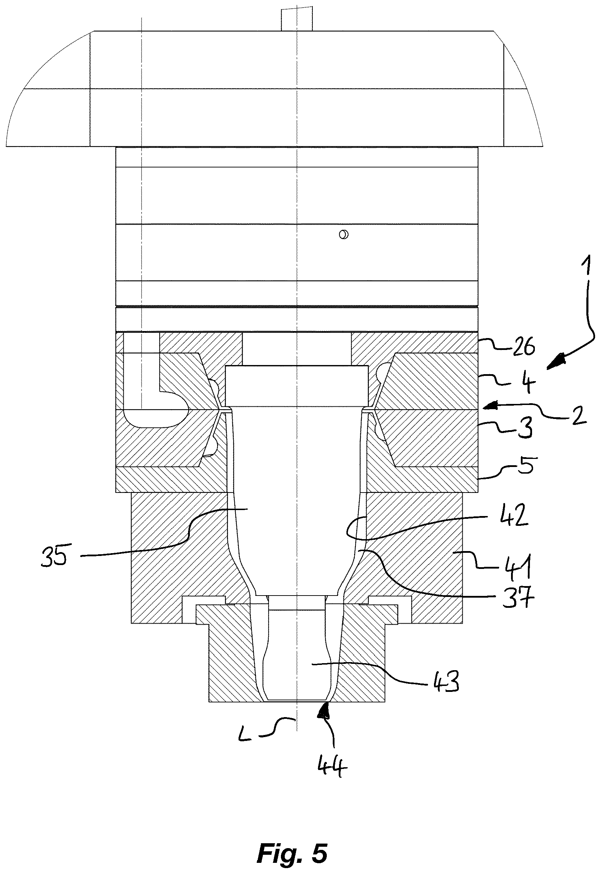

Figur 5 zeigt schematisch einen Extrusionsschlauchkopf mit einem Ringverteiler 1 gemäß der Figuren 1 bis 4. Der Ringverteiler 1 ist mit einem unteren Gehäuseteil 41 verbunden, in dem eine zentrale Bohrung 42 vorgesehen ist. Die Pinole 35 der zweiten Verteilerhülse 26 taucht bis in die zentrale Bohrung 42 des unteren Gehäuseteils 41 ein und bildet den Strömungskanal 37 fort.

Durch die Pinole 35 ragt ein Dorn 43 hindurch, der zusammen mit dem unteren Gehäuseteil 41 in einem unteren Ende eine Ringdüse 44 zum Austritt des schlauchförmigen Formlings bildet. Der Dorn 43 ist entlang der Längsachse L axial verstellbar, so dass die Ringdüse 44 verschlossen werden kann und die Dicke des Spalts der Ringdüse 44 eingestellt werden kann.

### Bezugszeichenliste

- 1: Ringverteiler
- 2: Aufnahmekörper
- 3: erstes Ringelement
- 4: zweites Ringelement
- 5: erste Verteilerhülse
- 6: erster Aufnahmeraum
- 7: Innenfläche des ersten Aufnahmeraums
- 8: Flanschabschnitt der ersten Verteilerhülse
- 9: Hülsenabschnitt der ersten Verteilerhülse
- 10: Außenfläche der ersten Verteilerhülse
- 11: Verteilernut
- 12: erster Verteilerraum
- 13: Ringspaltöffnung
- 14: erstes Ende (Zulaufende) der Verteilernut der ersten Verteilerhülse
- 15: zweites Ende (Auslaufende) der Verteilernut der ersten Verteilerhülse
- 16: Anschlusskanal
- 17: Nut
- 18: Oberfläche des ersten Ringelements
- 19: Nut
- 20: Oberfläche des zweiten Ringelements
- 21: Zulauf
- 22: erster Kanalast
- 23: zweiter Kanalast
- 24: erste Anschlussöffnung
- 25: Dichtabschnitt
- 26: zweite Verteilerhülse
- 27: Flanschabschnitt der zweiten Verteilerhülse
- 28: Hülsenabschnitt der zweiten Verteilerhülse
- 29: zweiter Aufnahmeraum
- 30: Außenfläche der zweiten Verteilerhülse
- 31: Verteilernut
- 32: zweite Anschlussöffnung
- 33: Innenfläche des zweiten Aufnahmeraums
- 34: zweiter Verteilerraum
- 35: Pinole
- 36: zentrale Bohrung der ersten Verteilerhülse
- 37: Strömungskanal
- 38: Durchgangsbohrung
- 39: Durchgangsbohrung
- 40: Grenze
- 41: unteres Gehäuseteil
- 42: zentrale Bohrung
- 43: Dorn
- 44: Ringdüse

- L: Längsachse

## Patentansprüche

1. Ringverteiler (1) für einen Extrusionsschlauchkopf zur Herstellung eines schlauchförmigen Formlings aus thermoplastischem Kunststoff, wobei der Ringverteiler (1) Folgendes aufweist:
einen Aufnahmekörper (2) mit einem ersten Aufnahmeraum (6) mit einer Innenfläche (7),
eine erste Verteilerhülse (5) mit einer Außenfläche (10), die eine Verteilernut (11) aufweist, wobei die erste Verteilerhülse (5) in dem ersten Aufnahmeraum (6) aufgenommen ist, sowie
einen ringförmigen ersten Verteilerraum (12), der zwischen der Innenfläche (7) des ersten Aufnahmeraums (6) und der Außenfläche (10) der ersten Verteilerhülse (5) gebildet ist, und der in eine Ringspaltöffnung (13) mündet,
**dadurch gekennzeichnet,**
**dass** die Außenfläche (10) der ersten Verteilerhülse (5) eine einzige wendelförmige Verteilernut (11) mit mehr als einer Windung und weniger als 1,25 Windungen aufweist.

2. Ringverteiler nach Anspruch 1,
**dadurch gekennzeichnet,**
**dass** die Verteilernut (11) der ersten Verteilerhülse (5) ein der Ringspaltöffnung (13) entferntes erstes Ende (14), das von einem Anschlusskanal (16) zur Zuführung von Kunststoffschmelze gespeist wird, und ein der Ringspaltöffnung (13) nahes zweites Ende (15) aufweist, und
**dass** die Tiefe der Verteilernut (11) der ersten Verteilerhülse (5) vom ersten Ende (14) zum zweiten Ende (15) abnimmt.

3. Ringverteiler nach einem der Ansprüche 1 oder 2,
**dadurch gekennzeichnet,**
**dass** die Außenfläche (10) der ersten Verteilerhülse (5) zumindest teilweise entlang einer axialen Erstreckung der ersten Verteilerhülse (5) kegelstumpfförmig gestaltet ist.

4. Ringverteiler nach einem der Ansprüche 1 bis 3,
**dadurch gekennzeichnet,**
**dass** die Außenfläche (10) der ersten Verteilerhülse (5) und die Innenfläche (7) des ersten Aufnahmeraums (6) im Bereich des ersten Verteilerraums (12) parallel zueinander verlaufen.

5. Ringverteiler nach einem der Ansprüche 1 bis 4,
**dadurch gekennzeichnet,**
**dass** die Außenfläche (10) der ersten Verteilerhülse (5) auf der von der Ringspaltöffnung (13) abgewandten Seite der Verteilernut (11) und bereichsweise zwischen den sich in axialer Richtung überlappenden Bereichen der Verteilernut (11) in dichtender Anlage zur Innenfläche (7) des ersten Aufnahmeraums (6) ist.

6. Ringverteiler nach Anspruch 5,
**dadurch gekennzeichnet,**
**dass** die Außenfläche (10) der ersten Verteilerhülse (5) zwischen den sich in axialer Richtung überlappenden Bereichen der Verteilernut (11) ausgehend vom ersten Ende (14) der Verteilernut (11) der ersten Verteilerhülse (5) in Richtung zum zweiten Ende (15) über einen Teil des überlappenden Bereichs in dichtender Anlage zur Innenfläche (7) des ersten Aufnahmeraums (6) ist.

7. Ringverteiler nach einem der Ansprüche 1 bis 6,
**dadurch gekennzeichnet,**
**dass** der Ringverteiler (1) ferner eine Pinole (35) aufweist, die sich durch eine zentrale Bohrung (36) der ersten Verteilerhülse (5) erstreckt, wobei zwischen der Pinole (35) und der ersten Verteilerhülse (5) ein ringförmiger Strömungskanal gebildet ist, in den die Ringspaltöffnung (13) mündet.

8. Ringverteiler nach einem der Ansprüche 1 bis 7, wobei der Ringverteiler ferner folgendes aufweist:
einen zweiten Aufnahmeraum (29) in dem Aufnahmekörper (2), wobei der zweite Aufnahmeraum (29) eine Innenfläche (33) aufweist,
eine zweite Verteilerhülse (26) mit einer Außenfläche (30), die eine Verteilernut (31) aufweist, wobei die zweite Verteilerhülse (26) in dem zweiten Aufnahmeraum (29) aufgenommen ist, sowie
einen ringförmigen zweiten Verteilerraum (34), der zwischen der Innenfläche (33) des zweiten Aufnahmeraums (29) und der Außenfläche (30) der zweiten Verteilerhülse (26) gebildet ist, und der in die Ringspaltöffnung (13) mündet,
wobei die Außenfläche (30) der zweiten Verteilerhülse (26) eine einzige wendelförmige Verteilernut (31) mit mehr als einer Windung und weniger als 1,25 Windungen aufweist.

9. Ringverteiler nach Anspruch 8,
**dadurch gekennzeichnet,**
**dass** die Außenfläche (10) der ersten Verteilerhülse (5) und die Außenfläche (30) der zweiten Verteilerhülse (26) jeweils zumindest teilweise entlang einer axialen Erstreckung des Ringverteilers (1) kegelstumpfförmig gestaltet sind.

10. Ringverteiler nach Anspruch 9,
**dadurch gekennzeichnet,**
**dass** sich der Kegelwinkel der Außenfläche (10) der ersten Verteilerhülse (5) und der Kegelwinkel der Außenfläche (30) der zweiten Verteilerhülse (26) in entgegengesetzte Richtungen öffnen.

11. Ringverteiler nach einem der Ansprüche 8 bis 10,
**dadurch gekennzeichnet,**
**dass** die Verteilernut (11) der ersten Verteilerhülse (5) ein der Ringspaltöffnung (13) entferntes erstes Ende (14) aufweist, das von einem Anschlusskanal (16) zur Zuführung von Kunststoffschmelze gespeist wird,
**dass** die Verteilernut (31) der zweiten Verteilerhülse (26) ein der Ringspaltöffnung (13) entferntes erstes Ende aufweist, das von dem Anschlusskanal (16) zur Zuführung von Kunststoffschmelze gespeist wird, und
**dass** das erste Ende (14) der Verteilernut (11) der ersten Verteilerhülse (5) und das erste Ende der Verteilernut (31) der zweiten Verteilerhülse (26) bezogen auf eine Längsachse (L) des Ringverteilers (1) auf diametral entgegengesetzten Seiten angeordnet sind.

## Claims

1. Annular manifold (1) for an extrusion parison head for producing a tubular moulding from a thermoplastic material, comprising:
an accommodation body (2) with a first accommodation chamber (6) with an inner surface (7),
a first distribution sleeve (5) with an outer surface (10), which has a distribution groove (11), wherein the first distribution sleeve (5) is accommodated in the first accommodation chamber (6), as well as
an annular first distribution chamber (12), which is formed between the inner surface (7) of the first accommodation chamber (6) and the outer surface (10) of the first distribution sleeve (5), and which opens into an annular gap opening (13),
**characterized in**
**that** the outer surface (10) of the first distribution sleeve (5) has a single helical distribution groove (11) with more than one winding and less than 1.25 windings.

2. Annular manifold according to claim 1,
**characterized in**
**that** the distribution groove (11) of the first distribution sleeve (5) has a first end (14) arranged distanced to the annular gap opening (13) and which is fed by a connecting channel (16) for feeding molten plastic, and a second end (15) arranged close to the annular gap opening (13), and
**that** the depth of the distribution groove (11) of the first distribution sleeve (5) decreases from the first end (14) to the second end (15).

3. Annular manifold according to one of claims 1 or 2,
**characterized in**
**that** the outer surface (10) of the first distribution sleeve (5) is formed frustoconically at least partially along an axial extension of the first distribution sleeve (5).

4. Annular manifold according to one of claims 1 to 3,
**characterized in**
**that** the outer surface (10) of the first distribution sleeve (5) and the inner surface (7) of the first accommodation chamber (6) extend parallel to each other in the area of the first distribution chamber (12).

5. Annular manifold according to one of claims 1 to 4,
**characterized in**
**that** the outer surface (10) of the first distribution sleeve (5) is in sealing contact with the inner surface (7) of the first accommodation chamber (6) on the side of the distribution groove (11) facing away from the annular gap opening (13) and partly between the regions of the distribution groove (11), overlapping each other in axial direction.

6. Annular manifold according to claim 5,
**characterized in**
**that** the outer surface (10) of the first distribution sleeve (5) is in sealing contact with the inner surface (7) of the first accommodation chamber (6) between the regions of the distribution groove (11), overlapping each other in axial direction, starting from the first end (14) of the distribution groove (11) of the first distribution sleeve (5) in direction towards the second end (15) along a part of the overlapping region.

7. Annular manifold according to one of claims 1 to 6,
**characterized in**
**that** the annular manifold (1) has further a mandrel (35), which extends through a central bore (36) of the first distribution sleeve (5), wherein between the mandrel (35) and the first distribution sleeve (5) an annular flow channel is formed, into which the annular gap opening (13) opens.

8. Annular manifold according to one of claims 1 to 7, wherein the annular manifold further comprises:
a second accommodation chamber (29) in the accommodation body (2),
wherein the second accommodation chamber (29) has an inner surface (33), a second distribution sleeve (26) with an outer surface (30) having a distribution groove (31), wherein the second distribution sleeve (26) is accommodated in the second accommodation chamber (29), as well as
an annular second distribution chamber (34) which is formed between the inner surface (33) of the second accommodation chamber (29) and the outer surface (30) of the second distribution sleeve (26) and which opens into the annular gap opening (13),
wherein the outer surface (30) of the second distribution sleeve (26) has a single helical distribution groove (31) with more than one winding and less than 1.25 windings.

9. Annular manifold according to claim 8,
**characterized in**
**that** the outer surface (10) of the first distribution sleeve (5) and the outer surface (30) of the second distribution sleeve (26) are formed frustoconically respectively at least partially along an axial extension of the annular manifold (1).

10. Annular manifold according to claim 9,
**characterized in**
**that** the cone angle of the outer surface (10) of the first distribution sleeve (5) and the cone angle of the outer surface (30) of the second distribution sleeve (26) open in opposite directions.

11. Annular manifold according to one of claims 8 to 10,
**characterized in**
**that** the distribution groove (11) of the first distribution sleeve (5) has a first end (14) arranged distanced to the annular gap opening (13) and which is fed by a connecting channel (16) for feeding molten plastic,
**that** the distribution groove (31) of the second distribution sleeve (26) has a first end arranged distanced to the annular gap opening (13) and which is fed by the connecting channel (16) for feeding molten plastic, and
**that** the first end (14) of the distribution groove (11) of the first distribution sleeve (5) and the first end of the distribution groove (31) of the second distribution sleeve (26) are arranged on diametrically opposite sides relative to a longitudinal axis (L) of the annular manifold (1).

## Revendications

1. Distributeur annulaire (1) pour une tête d'extrusion permettant de fabriquer une pièce moulée en forme tubulaire en matière thermoplastique, dans lequel le distributeur annulaire (1) présente ce qui suit :
un corps de réception (2) comprenant un premier espace de réception (6) avec une face intérieure (7),
un premier manchon distributeur (5) avec une face extérieure (10) qui présente une rainure distributrice (11), dans lequel le premier manchon distributeur (5) est reçu dans le premier espace de réception (6), ainsi
qu'un premier espace distributeur (12) annulaire qui est formé entre la face intérieure (7) du premier espace de réception (6) et la face extérieure (10) du premier manchon distributeur (5) et qui débouche dans une ouverture de rainure annulaire (13),
**caractérisé en ce que**
la face extérieure (10) du premier manchon distributeur (5) présente une seule rainure distributrice (11) hélicoïdale avec plus d'une spire et moins de 1,25 spires.

2. Distributeur annulaire selon la revendication 1, **caractérisé en ce que** la rainure distributrice (11) du premier manchon distributeur (5) présente une première extrémité (14) éloignée de l'ouverture de rainure annulaire (13), qui est alimentée par un canal de raccordement (16) pour alimenter de la fonte de plastique et présente une seconde extrémité (15) proche de l'ouverture de rainure annulaire (13), et que la profondeur de la rainure distributrice (11) du premier manchon distributeur (5) décroît de la première extrémité (14) vers la seconde extrémité (15) .

3. Distributeur annulaire selon l'une des revendications 1 ou 2,
**caractérisé en ce que**
la surface extérieure (10) du premier manchon distributeur (5) est formée tronconique au moins partiellement le long d'un allongement axial du premier manchon distributeur (5).

4. Distributeur annulaire selon l'une des revendications 1 à 3,
**caractérisé en ce que**
la surface extérieure (10) du premier manchon distributeur (5) et la face intérieure (7) du premier espace de réception (6) sont parallèles entre elles au niveau du premier espace distributeur (12).

5. Distributeur annulaire selon l'une des revendications 1 à 4,
**caractérisé en ce que**
la surface extérieure (10) du premier manchon distributeur (5) est sur le côté de la rainure distributrice (11) détourné de l'ouverture de rainure annulaire (13) et partiellement entre les zones de la rainure distributrice (11) se chevauchant dans le sens axial, en appui d'étanchéité par rapport à la face intérieure (7) du premier espace de réception (6).

6. Distributeur annulaire selon la revendication 5,
**caractérisé en ce que**
la surface extérieure (10) du premier manchon distributeur (5) est entre les zones de la rainure distributrice (11) se chevauchant dans le sens axial, partant de la première extrémité (14) de la rainure distributrice (11) du premier manchon distributeur (5) en direction de la seconde extrémité (15) sur une partie de la zone se chevauchant, en appui d'étanchéité par rapport à la face intérieure (7) du premier espace de réception (6).

7. Distributeur annulaire selon l'une des revendications 1 à 6,
**caractérisé en ce que**
le distributeur annulaire (1) présente en outre un fourreau (35) qui s'étend à travers un perçage central (36) du premier manchon distributeur (5), dans lequel entre le fourreau (35) et le premier manchon distributeur (5), il est formé un canal d'écoulement annulaire dans lequel débouche l'ouverture de rainure annulaire (13).

8. Distributeur annulaire selon l'une des revendications 1 à 7,
**caractérisé en ce que**
le distributeur annulaire présente en outre ce qui suit :
un second espace de réception (29) dans le corps de réception (2), dans lequel le second espace de réception (29) présente une face intérieure (33),
un second manchon distributeur (26) avec une face extérieure (30), qui présente une rainure distributrice (31), dans lequel le second manchon distributeur (26) est reçu dans le second espace de réception (29), ainsi
qu'un second espace distributeur (34) annulaire qui est formé entre la face intérieure (33) du second espace de réception (29) et la face extérieure (30) du second manchon distributeur (26), et qui débouche dans l'ouverture de rainure annulaire (13),
dans lequel la face extérieure (30) du second manchon distributeur (26) présente une seule rainure distributrice hélicoïdale (31) avec plus d'une spire et moins de 1,25 spires.

9. Distributeur annulaire selon la revendication 8,
**caractérisé en ce que**
la surface extérieure (10) du premier manchon distributeur (5) et la face extérieure (30) du second manchon distributeur (26) sont formées tronconiques respectivement au moins partiellement le long d'un prolongement axial du distributeur annulaire (1).

10. Distributeur annulaire selon la revendication 9,
**caractérisé en ce que** l'angle au sommet de la surface extérieure (10) du premier manchon distributeur (5) et l'angle au sommet de la face extérieure (30) du second manchon distributeur (26) ouvrent dans des directions opposées.

11. Distributeur annulaire selon l'une des revendications 8 à 10,
**caractérisé en ce que**
la rainure distributrice (11) du premier manchon distributeur (5) présente une première extrémité (14) éloignée de l'ouverture de rainure annulaire (13), qui est alimentée par un canal de raccordement (16) pour fournir de la fonte de plastique,
que la rainure distributrice (31) du second manchon distributeur (26) présente une première extrémité éloignée de l'ouverture de rainure annulaire (13), qui est alimentée par le canal de raccordement (16) pour fournir de la fonte de plastique,
que la première extrémité (14) de la rainure distributrice (11) du premier manchon distributeur (5) et la première extrémité de la rainure distributrice (31) du second manchon distributeur (26) rapporté à un axe longitudinal (L) du distributeur annulaire (1) sont disposées sur des côtés diamétralement opposés.
